# EUROPÄISCHE PATENTANMELDUNG

(11) **EP 4 836 101 A1**
(43) Veröffentlichungstag der Anmeldung: **04.11.2026**
(21) Anmeldenummer: 26166301.7
(22) Anmeldetag: 20.03.2026
(51) Int. Cl.: H01M 50/103, B60L 50/64, H01M 50/15, H01M 50/169, H01M 50/209, H01M 50/249, H01M 50/289

(54) **BATTERIEZELLE, VORZUGSWEISE PRISMATISCHE BATTERIEZELLE, UND BATTERIEMODUL MIT ZUMINDEST EINER SOLCHEN BATTERIEZELLE**

(30) Priorität: 02.05.2025 DE 102025116880
(71) Anmelder: MAN Truck & Bus SE, 80995 München (DE)
(72) Erfinder: Burkhardt, Christian, 80995 München (DE); Sippl, Christian, 80995 München (DE); Matthias, Korn, 80995 München (DE); Hemmeter, Oliver, 80995 München (DE)

(57) **Zusammenfassung**

Die Erfindung betrifft eine Batteriezelle (100), mit einem Zellendeckel (50) und einer Zellendose (60), wobei die Zellendose (60) zwei erste einander gegenüberliegende Seitenflächen (61) und zwei zweite einander gegenüberliegende Seitenflächen (62) aufweist, wobei die zwei ersten Seitenflächen (61) schmäler sind als die zwei zweiten Seitenflächen (62), wobei der Zellendeckel (50) und die Zellendose (60) durch eine, vorzugsweise umlaufende, Schweißnaht (70) miteinander verbunden sind und ein Schweißnahtanfang (71) und/oder ein Schweißnahtende (72) der Schweißnaht (70) auf zumindest einer der zwei ersten Seitenflächen (61) angeordnet ist. Die Erfindung betrifft auch ein Batteriemodul (200) mit einer oder mehreren Batteriezellen (100) und einen elektrischen Energiespeicher mit einem solchen Batteriemodul (200).

## Beschreibung

Die Erfindung betrifft eine (vorzugsweise prismatische) Batteriezelle und ein Batteriemodul mit zumindest einer solchen Batteriezelle und einen elektrischen Energiespeicher mit zumindest einem solchen Batteriemodul.

Es ist bekannt, dass das Volumen von z. B. Lithium-Ionen-Batteriezellen im entladenen Zustand kleiner sein kann als im geladenen Zustand. Diese großteils reversible Volumenänderung wird in der Literatur auch als "Breathing" bezeichnet. Weiterhin ist bekannt, dass bei Batteriezellen das Batteriezellenvolumen mit zunehmender Anzahl an Lade- bzw. Entladezyklen zunehmen kann. Diese irreversible, im Lebensdauerverlauf auftretende volumetrische Ausdehnung wird auch als "Swelling" bezeichnet.

Wird zu viel Bauraum für diese Volumenänderung vorgehalten, verstärkt die fehlende Gegenkraft die auftretenden Alterungsmechanismen. Eine zu starke Versteifung der Umgebung führt zu Kapazitätsverlusten (durch beispielsweise eine reduzierte Anodenporosität). Die volumetrische Ausdehnung des Aktivmaterials der Batteriezelle resultiert in einer Deformation der Zellendose, wobei das absolute Deformationsmaximum im mittleren Bereich der Zellendose auftritt. Diese Deformation erzeugt insbesondere Zug- und/oder Biegespannungen in der starren Schweißnaht, mittels der ein Zellendeckel mit der Zellendose verschweißt ist, welche überlagert mit ladungsbedingten Volumenänderungen des Aktivmaterials zu einer Überlastung der Schweißnaht führen können.

Batteriezellen umfassen üblicherweise eine Zellendose, einen Zellendeckel und einen Zellenboden. Im Fall einer prismatischen Batteriezelle umfasst die Zellendose üblicherweise zwei erste einander gegenüberliegende Seitenflächen und zwei zweite einander gegenüberliegende Seitenflächen, wobei die zwei ersten Seitenflächen schmäler sind als die zwei zweiten Seitenflächen, sodass die Zellendose und/oder die Batteriezelle die Form eines im Wesentlichen rechteckigen Parallellepipeds und/oder Quaders aufweist.

Der Zellendeckel beinhaltet meist verschiedene Komponenten wie beispielsweise elektrische Kontakte (z. B. Elektroden) und ein Entlüftungsventil, das meist zwischen den elektrischen Kontakten angeordnet ist. Aufgrund dieser Komponenten sind die Querschnitte des Zellendeckels an den jeweiligen Bereichen reduziert und daher in ihrer mechanischen Belastbarkeit herabgesetzt.

Der Schweißnahtanfang und das Schweißnahtende der Schweißnaht zwischen Zellendeckel und Zellendose sind insbesondere durch die Swelling- und/oder Breathing-Beanspruchung und/oder durch ungleichmäßige Wärmeeinbringung anfälliger für ein Versagen (z. B. Schweißnahtbruch) und/oder zumindest für Qualitätsverluste, beispielsweise Lunkerbildung, Risse, thermische Risse und/oder Poren etc..

Aus der Praxis ist es bekannt, dass die zwischen Zellendeckel und Zellendose ausgebildete Schweißnaht auf einer der zwei zweiten Seitenflächen anfängt und endet, also auf einer relativ zu den zwei ersten Seitenflächen längeren Seitenfläche. Somit fallen der Schweißnahtanfang und das Schweißnahtende auf einer der zwei längeren Seitenflächen zusammen und zwar üblicherweise benachbart zu dem Entlüftungsventil oder den Zellelektroden und/oder in einem mittigen Schweißnahbereich auf einer der zwei längeren Seitenflächen.

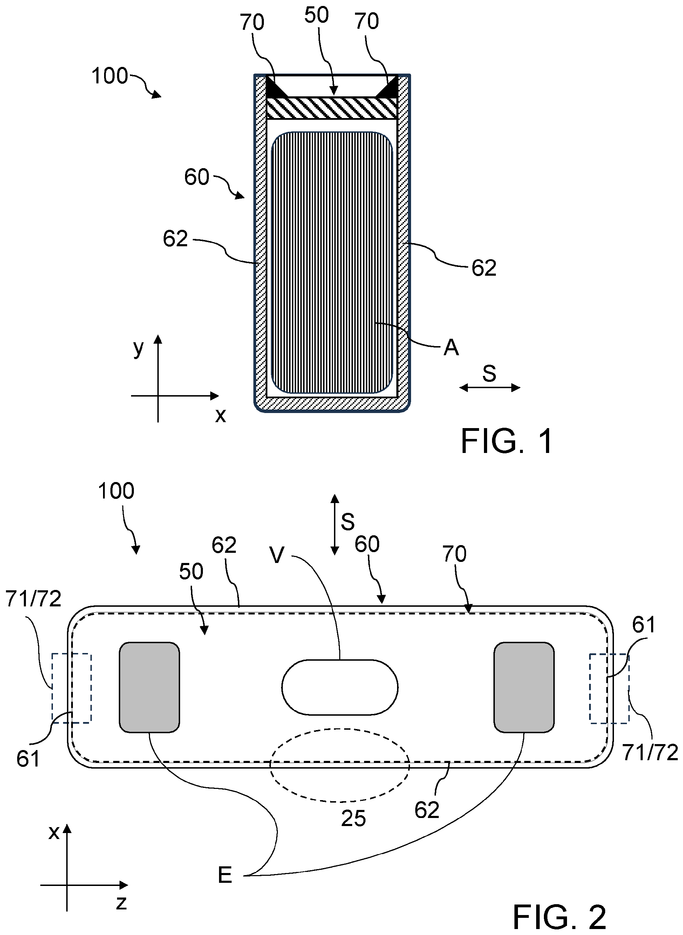

Aufgrund von Alterungseffekten der Batteriezelle kommt es im Lebensdauerverlauf zu einer quasi-statischen volumetrischen Ausdehnung des Aktivmaterials der Batteriezelle, insbesondere bei Lithium-Ionen-Batteriezellen. Überlagert dazu erfolgt üblicherweise eine ladungszustandsabhängige Ausdehnung und Kontraktion des Aktivmaterials, wodurch eine dynamische Ausdehnung resultiert. Beide Ausdehnungen (insbesondere Swelling und Breathing) führen bei prismatischen Batteriezellen zu einer Biegewechselbelastung und/oder Biegeschwellbelastung der Schweißnaht zwischen dem Zellendeckel und der Zellendose. Die Schweißnaht wird durch das Swelling- und Breathingverhalten des Aktivmaterials statisch und dynamisch belastet. Die Ausdehnung des Aktivmaterials und somit der Zellendose erfolgt primär in Dickenrichtung der Batteriezelle und folglich in x-, Swelling- und/oder Breathing-Richtung einer Batteriezelle (vgl. z. B. Figuren 1 bis 4). Zusätzlich kann die Schweißnaht durch Wärmebeanspruch, Thermodehnung und/oder Wärmedehnung beeinträchtigt werden.

Durch Tests, Untersuchungen und Analysen wurde erfinderseitig herausgefunden, dass die Schweißnaht, insbesondere deren Schweißnahtanfang und Schweißnahtende, über die Zeit eine Schwachstelle darstellen kann (z. B. frühzeitiger Schweißnahtbruch, Lunkerbildung, Risse, thermische Risse und/oder Poren etc.), was die Lebensdauer der Batteriezelle reduzieren kann, insbesondere weil es durch die Swelling-, Breathing- und/oder Wärmebeanspruchungen, Thermodehnungen und/oder Wärmedehnungen zu Spannungsspitzen im Zellendeckel und somit in der Schweißnaht kommen kann, insbesondere aufgrund der Geometrie des Zellendeckels und der Zellendose und/oder aufgrund der Anordnung und Verteilung unterschiedlicher Komponenten im Zellendeckel und der damit einhergehenden Querschnittsreduzierungen des Zellendeckels, die wiederum mit insbesondere Steifigkeitssprüngen des Zellendeckels einhergehen.

Eine Aufgabe der Erfindung ist es, eine (vorzugsweise prismatische) Batteriezelle zu schaffen, wobei eine Schweißnaht zwischen Zellendeckel und Zellendose, insbesondere ein Schweißnahtanfang und/oder ein Schweißnahtende der Schweißnaht, eine hohe Lebensdauer aufweist, insbesondere trotz z. B. Swellingbeanspruchung, Breathingbeanspruchung, Wärmebeanspruchung, Thermodehnungen und/oder Wärmedehnungen. Ein bevorzugtes Ziel ist es insbesondere, die Gesamtlebensdauer der vorzugsweise gesamten, insbesondere umlaufenden Schweißnaht zu erhöhen.

Die Aufgabe kann durch die Merkmale des unabhängigen Anspruchs gelöst werden. Vorteilhafte Weiterbildungen der Erfindung sind in den Unteransprüchen offenbart oder ergeben sich aus der folgenden Beschreibung bevorzugter Ausführungsbeispiele der Erfindung.

Die Erfindung betrifft eine (vorzugsweise prismatische) Batteriezelle.

Die Batteriezelle ist vorzugsweise eine Batteriezelle für ein Batteriemodul und/oder einen elektrischen Energiespeicher, insbesondere zum Antreiben eines elektrisch antreibbaren Kraftfahrzeugs, wie beispielsweise ein Lastkraftwagen oder ein Omnibus.

Die Batteriezelle umfasst einen Zellendeckel und eine Zellendose, vorzugsweise einen metallischen Zellendeckel und/oder eine metallische Zellendose aus beispielsweise Stahl oder Aluminium. Die Batteriezelle kann insbesondere auch einen Zellenboden aufweisen, z. B. einen metallischen Zellenboden aus beispielsweise Stahl oder Aluminium.

Die Zellendose umfasst zwei erste einander gegenüberliegende (z. B. kurze) Seitenflächen (z. B. Seitenwände) und zwei zweite einander gegenüberliegende (z. B. lange) Seitenflächen (z. B. Seitenwände).

Die zwei ersten Seitenflächen und/oder die zwei zweiten Seitenflächen sind vorzugsweise (zweckmäßig im Wesentlichen und/oder zumindest abschnittsweise) eben und/oder planar.

Die zwei ersten Seitenflächen sind vorzugsweise schmäler (z. B. kürzer) als die zwei zweiten Seitenflächen, sodass vorzugsweise die Zellendose und/oder die Batteriezelle die Form eines im Wesentlichen rechteckigen Parallellepipeds und/oder Quaders aufweist (zweckmäßig mit und/oder ohne abgerundeten Ecken und/oder Kanten).

Es ist möglich, dass die zwei ersten Seitenflächen (zweckmäßig im Wesentlichen) parallel zueinander angeordnet sind, die zwei zweiten Seitenflächen (zweckmäßig im Wesentlichen) parallel zueinander angeordnet sind und/oder die zwei ersten Seitenflächen (zweckmäßig im Wesentlichen) orthogonal zu den zwei zweiten Seitenflächen angeordnet sind.

Der Zellendeckel und die Zellendose sind durch eine (vorzugsweise umlaufende) Schweißnaht miteinander verbunden.

Es ist insbesondere möglich, dass ein Schweißnahtanfang und/oder ein Schweißnahtende der Schweißnaht auf zumindest einer der zwei ersten Seitenflächen angeordnet ist, vorzugsweise in einem Nahtvereinigungsbereich (z. B. Nahtüberlappungs- und/oder Nahtstoßbereich) der (insbesondere umlaufenden) Schweißnaht.

Dadurch ist es vorteilhaft möglich, dass der Schweißnahtanfang und/oder das Schweißnahtende (also insbesondere ein kritischer Abschnitt der Schweißnaht) in einem insbesondere hinsichtlich Swelling und/oder Breathing optimierten und/oder nur gering belasteten Bereich positioniert wird. Dadurch wiederum ist es möglich, dass vorteilhaft die Lebensdauer der Schweißnaht, insbesondere deren Anfang und/oder Ende, erhöht wird.

Der Schweißnahtanfang und das Schweißnahtende können vorzugsweise einen Nahtvereinigungsbereich (z. B. Nahtüberlappungs- und/oder Nahtstoßbereich) der Schweißnaht bilden.

Es ist möglich, dass der Schweißnahtanfang und das Schweißnahtende sich auf einer der zwei ersten Seitenflächen vereinigen, z. B. einander überlappen und/oder aneinanderstoßen, insbesondere in einem Nahtvereinigungsbereich (z. B. Nahtüberlappungs- und/oder Nahtstoßbereich).

Beispielsweise kann ein Schweißnahtanfang, ein Schweißnahtende und/oder ein Nahtvereinigungsbereich auf nur einer der zwei ersten Seitenflächen angeordnet sein, oder es kann ein Schweißnahtanfang, ein Schweißnahtende und/oder ein Nahtvereinigungsbereich auf jeweils einer der zwei ersten Seitenflächen angeordnet sein.

Die Schweißnaht ist vorzugsweise (insbesondere entlang des Zellendeckels) umlaufend.

Es ist möglich, dass der Schweißnahtanfang und/oder das Schweißnahtende auf zumindest einer der zwei ersten Seitenflächen angeordnet ist, sodass bei einer durch ein Swelling und/oder Breathing der Batteriezelle bedingten Kraftbeaufschlagung der Schweißnaht der Schweißnahtanfang und das Schweißnahtende und somit insbesondere der Nahtvereinigungsbereich zweckmäßig primär auf Zug und/oder Druck beansprucht werden und/oder nicht oder nur sekundär auf Scherung und/oder Biegung.

Im und/oder auf dem Zellendeckel können beispielsweise zwei elektrische Terminals (z. B. elektrische Elektroden) und zumindest ein Sicherheitsventil und/oder Sicherheitselement (z. B. ein Unterlüftungsventil, ein Entlüftungsventil, ein Druckausgleichs- und/oder Überdruckventil, ein Re-Closing-Ventil, und/oder eine Berstscheibe und/oder eine Berstmembran) angeordnet sein, wobei vorzugsweise das Sicherheitsventil und/oder das zumindest eine Sicherheitselement beispielsweise zwischen den zwei Terminals positioniert sein kann. Alternativ oder ergänzend kann in der Zellendose beispielsweise Aktivmaterial untergebracht sein.

Zu erwähnen ist nochmals, dass der Schweißnahtanfang und das Schweißnahtende sich beispielsweise in einem Nahtvereinigungsbereich (z. B. einem Nahtüberlappungs- und/oder Nahtstoßbereich) vereinigen können, z. B. aneinanderstoßen und/oder überlappen können.

Im Kontext der Erfindung können die zwei ersten Seitenflächen beispielsweise eben, planar oder bogenförmig ausgebildet sein.

Im Kontext der Erfindung können die zwei zweiten Seitenflächen beispielsweise eben und/oder planar ausgebildet sein.

Im Kontext der Erfindung ist es beispielsweise möglich, dass die Schweißnaht, der Schweißnahtanfang, das Schweißnahtende und/oder der Nahtvereinigungsbereich, insbesondere unmittelbar oder mittelbar (z. B. über eine Beschichtung, eine Folie und/oder ein Zwischenteil etc.), auf zumindest einer der zwei ersten Seitenflächen angeordnet ist und/oder anfängt und/oder endet, vorzugsweise sodass insbesondere der Schweißnahtanfang, das Schweißnahtende und/oder der Nahtvereinigungsbereich, insbesondere unmittelbar oder mittelbar (z. B. über eine Beschichtung, eine Folie und/oder ein Zwischenteil etc.), auf zumindest einer der zwei ersten Seitenflächen angeordnet sein kann.

Es ist möglich, dass ein Ausgleichselement seitlich außen neben einer der zwei zweiten Seitenflächen positioniert ist.

Das Ausgleichselement kann vorzugsweise dazu ausgebildet sein, zwischen der Batteriezelle und einem Modulendelement angeordnet zu werden.

Das Modulendelement kann z. B. eine Platte sein, nachfolgend aufgrund ihrer Anordnung am Modulende als Modulendplatte bezeichnet.

Ein (vorzugsweise eine Vielzahl an Batteriezellen aufweisender) Batteriezellenstapel kann (z. B. in Stapelrichtung der Batteriezellen) beispielsweise beidseitig von jeweils einem solchen Modulendelement (z. B. Modulendplatte) begrenzt sein, mittels derer der Batteriezellenstapel gehaltert und/oder verspannt werden kann.

Das Ausgleichselement weist vorzugsweise einen auf Höhe des mittleren Bereichs der Batteriezelle angeordneten und vorzugsweise dort anliegenden ersten Bereich und einen auf Höhe des Zellendeckels angeordneten und vorzugsweise dort anliegenden zweiten Bereich auf. Nachfolgend wird der erste Bereich als mittlerer Bereich und der zweite Bereich als äußerer Bereich des Ausgleichselements bezeichnet.

Das Ausgleichselement kann bevorzugt dazu ausgebildet sein, bei einer durch ein Swelling der Batteriezelle bedingten Kraftbeaufschlagung des Ausgleichselements, in dem mittleren Bereich des Ausgleichselements in Richtung der Kraftbeaufschlagung zu deformieren, bevorzugt zur Verringerung einer Druckspannung im mittleren Bereich der ersten Batteriezelle. Das Swelling der Batteriezelle(n) kann auch als Schwellung der Batteriezelle bezeichnet werden. Die Richtung der Kraftbeaufschlagung ist insbesondere diejenige Richtung, in der die erste Batteriezelle im Swelling-Zustand den mittleren Bereich des Ausgleichselements in Richtung des Modulendelements drückt. D. h. als Reaktion auf die Kraftbeaufschlagung deformiert sich vorzugsweise der mittlere Bereich des Ausgleichselements in Richtung des Modulendelements.

Alternativ oder ergänzend ist das Ausgleichselement bevorzugt dazu ausgebildet, bei einer durch ein Swelling der Batteriezelle bedingten Kraftbeaufschlagung des Ausgleichselements mittels des äußeren Bereichs des Ausgleichselements eine entgegengesetzt zur Richtung der Kraftbeaufschlagung gerichtete Kraft und/oder eine Druckspannung auf den Bereich des Zellendeckels und/oder auf einen Schweißnahtbereich der Schweißnaht zu erzeugen.

Der Schweißnahtbereich ist beispielsweise ein (z. B. mittiger) Schweißnahtbereich (zweckmäßig mittelbar oder unmittelbar) auf zumindest einer der zwei zweiten Seitenflächen, vorzugsweise der zweiten Seitenfläche, die zweckmäßig neben und/oder gegenüber dem Ausgleichselement anzuordnen ist.

Vorteilhaft kann hierdurch einerseits durch die Deformation im mittleren Bereich in Richtung der Kraftbeaufschlagung ein Kompensationsvolumen, d. h. ein freier Swellingraum, für die anschwellende Batteriezelle bereitgestellt werden, in das sich der mittlere Bereich der Batteriezelle, in dem das Swelling-bedingte Deformationsmaximum auftritt, hinein ausdehnen kann. Druckspannungen im mittleren Bereich der Batteriezelle können dadurch vorteilhaft reduziert werden. Gleichzeitig kann bevorzugt jedoch der äußere Bereich des Ausgleichselements entgegen der Richtung der Kraftbeaufschlagung eine Druckspannung und Kraft im Bereich des Zellendeckels erzeugen, somit auch insbesondere in dem Schweißnahtbereich der Schweißnaht, wodurch die Schweißnaht vorteilhaft entlastet werden kann. Dies wirkt sich vorteilhaft positiv auf die Lebensdauer der Schweißnaht aus.

Das Ausgleichselement kann alternativ oder ergänzend als Ausgleichselement zur Breathing- und/oder Swelling-Kompensation dienen, als solches bezeichnet werden und/oder als nachgiebiges System bezeichnet werden.

Das Ausgleichselement kann beispielsweise als flexibles, elastisches, nachgiebiges und/oder verformbares Bauteil ausgebildet sein. Das Ausgleichselement ist bevorzugt einstückig ausgebildet.

Das Ausgleichselement kann z. B. dazu ausgebildet sein, bei einer durch ein Swelling der Batteriezelle bedingten Kraftbeaufschlagung des Ausgleichselements den äußeren Bereich des Ausgleichselements entgegen der Richtung der Kraftbeaufschlagung zu deformieren, vorzugsweise zur Erhöhung einer Druckspannung auf den Bereich des Zellendeckels und/oder den Schweißnahtbereich der Schweißnaht.

Es ist möglich, dass das Ausgleichselement einen Freiraum ausbildet, vorzugsweise einen Freiraum zwischen dem mittleren Bereich des Ausgleichselements und dem Modulendelement und/oder zur Aufnahme einer durch die Kraftbeaufschlagung bedingten Deformation des mittleren Bereichs des Ausgleichselements und/oder der Batteriezelle hin zum Modulendelement.

Bevorzugt ist ein zwischen dem mittleren Bereich des Ausgleichselements und dem Modulendelement angeordneter Freiraum vorgesehen, insbesondere zur Aufnahme einer durch die Kraftbeaufschlagung bedingten Deformation des mittleren Bereichs des Ausgleichselements und/oder der Batteriezelle hin zum Modulendelement.

Dieser Freiraum bildet vorzugsweise das vorstehend genannte Kompensationsvolumen und/oder den freien Swelling- und/oder Breathingraum aus. Hierdurch kann vorteilhaft ein Aufnahmeraum für den mittleren Bereich der Batteriezelle, in dem das Swelling- und/oder Breathing bedingte Deformationsmaximum auftritt, bereitgestellt werden.

Gemäß einer Ausführungsform kann das Ausgleichselement dazu ausgebildet sein, bei einer durch ein Swelling der Batteriezelle bedingten Kraftbeaufschlagung des Ausgleichselements den äußeren Bereich des Ausgleichselements entgegen der Richtung der Kraftbeaufschlagung zu deformieren, vorzugsweise zur Erzeugung einer Druckspannung auf den Bereich des Zellendeckels und/oder den Schweißnahtbereich, wobei die Druckspannung insbesondere zu einer Entlastung der Schweißnaht führen kann. Mit anderen Worten kann sich vorzugsweise das Ausgleichselement in Reaktion auf die anschwellende Batteriezelle in seinem mittleren Bereich in Richtung der Kraftbeaufschlagung und in seinem äußeren Bereich jedoch entgegen der Kraftbeaufschlagung deformieren. Zweckmäßig kann diese entgegengesetzte oder "negative" Deformation im oberen Bereich vorteilhafte Druckspannungen insbesondere im Schweißnahtbereich der Schweißnaht induzieren.

Das Ausgleichselement kann aus einem insbesondere verformbaren Material gebildet und so geformt und zwischen der Batteriezelle und dem Modulendelement anordenbar sein, dass der mittlere Bereich des Ausgleichselements ohne die Kraftbeaufschlagung nicht am Modulendelement anliegt und/oder bei der Kraftbeaufschlagung eine entgegen der Richtung der Kraftbeaufschlagung gerichtete Abstützkraft in dem äußeren Bereich des Ausgleichselements erzeugt.

Anders ausgedrückt kann das Ausgleichselement bevorzugt so ausgeführt sein, dass das Ausgleichselement bei einer durch ein Swelling der Batteriezelle bedingten Kraftbeaufschlagung auf den mittleren Bereich des Ausgleichselements eine Gegenkraft im oberen Bereich des Ausgleichselements erzeugt, die gegen den Bereich des Zellendeckels und/oder den Schweißnahbereich drückt. Hierbei gibt der mittlere Bereich die Swelling-bedingte Kraftbeaufschlagung vorzugsweise nicht direkt im mittleren Bereich an das Modulendelement weiter, sondern leitet diese vorzugsweise an den äußeren Bereich weiter, der sich in Reaktion auf die Kraftbeaufschlagung an der Modulendplatte abstützt und eine Gegenkraft entgegen der Richtung der Kraftbeaufschlagung erzeugt, die gegen den Bereich des Zellendeckels und/oder des Schweißnahbereichs drückt.

Besonders vorteilhaft ist eine Ausführungsform, bei der das Ausgleichselement derart ausgebildet ist, dass die mittels des äußeren Bereichs des Ausgleichselements erzeugte Druckspannung auf den Bereich des Zellendeckels und/oder den Schweißnahbereich proportional zur Kraftbeaufschlagung und/oder proportional zur Deformation des mittleren Bereichs in Richtung der Kraftbeaufschlagung ist. D.h. beispielsweise: Druckspannungen im Bereich des Zellendeckels, die durch das sich am Modulendelement abstützende Ausgleichselement induziert werden, nehmen mit steigender Ausdehnung (Swelling) der Batteriezelle und damit mit steigender Belastung der Schweißnaht zu. Die Lebensdauer der Schweißnaht kann hierdurch vorteilhaft noch wirksamer erhöht werden.

Gemäß einer weiteren Ausführungsform ist der mittlere Bereich des Ausgleichselements zwischen dem äußeren Bereich und einem zweiten äußeren Bereich angeordnet.

Beide äußere Bereiche sind vorzugsweise dazu ausgebildet, um am Modulendelement anzuliegen und/oder um sich am Modulendelement abzustützen. Die beiden äußeren Bereiche können beispielsweise auch als unterer und oberer Bereich des Ausgleichselements bezeichnet werden.

Beide äußere Bereiche liegen vorzugsweise an seitlichen Randbereichen der Batteriezelle an und/oder stützen sich dort ab (z. B. auf Höhe des Zellendeckels und/oder auf Höhe eines Zellenbodens der Batteriezelle).

Beispielsweise kann der äußere Bereich des Ausgleichselements an einem oberen Bereich der Batteriezelle auf Höhe des Zellendeckels und/oder auf Höhe der Schweißnaht anliegen.

Der mittlere Bereich des Ausgleichselements liegt dagegen vorzugsweise nur an dem mittleren (zweckmäßig seitlichen) Bereich der Batteriezelle an.

Alternativ oder ergänzend weist das Ausgleichselement vorzugsweise ferner zwei (insbesondere gekröpfte (z. B. gekrümmte oder abgewinkelte und/oder schräge) Verbindungsabschnitte auf, über die die äußeren Bereiche mit dem mittleren Bereich des Ausgleichselements verbunden sind.

Die Verbindungsabschnitte können beispielsweise schräg zur Stapelrichtung der Batteriezellen und/oder zur Swelling-Richtung der Batteriezellen ausgerichtet sein.

Die Verbindungsabschnitte sind bevorzugt ausgebildet, um weder an der Batteriezelle noch am Modulendelement anzuliegen.

Die Verbindungsabschnitte können im Querschnitt z. B. stegförmig ausgeführt sein.

Vorteilhaft kann die auf den mittleren Bereich wirkende Kraftbeaufschlagung über die Verbindungsabschnitte teilweise an die äußeren Bereiche weitergeleitet werden. Über die Abstützung der äußeren Bereiche insbesondere am Modulendelement kann dann in Reaktion hierauf eine entsprechende Gegenkraft in Richtung der ersten Batteriezelle erzeugt werden. Entsprechend wird dadurch vorzugsweise eine Druckspannung auf den oberen und unteren Bereich der Batteriezelle erzeugt, die im oberen Bereich vorteilhaft zu einer Entlastung der Schweißnaht, insbesondere des Schweißnahtbereichs, führen kann.

In einer Weiterbildung kann das Ausgleichselement vorzugsweise lediglich durch den mittleren Bereich, die beiden äußeren Bereiche und die beiden Verbindungsabschnitte gebildet sein.

In einer weiteren Ausführungsform kann sich der mittlere Bereich des Ausgleichselements beispielsweise mindestens über 1/3 der Höhe der Batteriezelle erstrecken und/oder an dieser anliegen. Zudem oder alternativ können der mittlere Bereich und/oder die Verbindungsabschnitte jeweils plattenförmig ausgeführt sein, zweckmäßig mitplanen Oberflächen.

Optional kann eine Dicke der äußeren Bereiche, insbesondere in Stapelrichtung des Batteriezellenstapels, mindestens doppelt so groß sein wie die Dicke des mittleren Bereichs und/oder der Verbindungsabschnitte. Zudem oder alternativ weisen die äußeren Abschnitte beispielsweise jeweils plane Auflageflächen auf, mit denen die äußeren Abschnitte an der Batteriezelle und/oder dem Modulendelement anliegen können. Die Auflagefläche zur Anlage und Abstützung am Modulendelement kann dabei optional größer, vorzugsweise doppelt so groß, sein wie die Auflagefläche zur Anlage an der Batteriezelle.

Vorstehend wurde festgestellt, dass das Ausgleichselement vorzugsweie an der Batteriezelle anliegen kann. Im Kontext der Erfindung kann das Ausgleichselement insbesondere unmittelbar an der Batteriezelle anliegen oder mittelbar z. B. über eine Zwischenlage.

Zu erwähnen ist, dass der Schweißnahtanfang und/oder das Schweißnahtende vorzugsweise an, in und/oder auf einem Bereich des Zellendeckels, in dem (insbesondere im Wesentlichen) kein Steifigkeitsübergang und/oder Steifigkeitssprung vorliegt, positioniert sein kann. Alternativ oder ergänzend kann der Schweißnahtanfang und/oder das Schweißnahtende vorzugsweise auf zumindest einer der zwei ersten Seitenflächen positioniert sein, was insbesondere in Bezug auf die Belastung durch Swelling und/oder Breathing vorteilhaft ist.

Im Kontext der Erfindung ist es vorzugsweise möglich, die Gesamtlebensdauer der (insbesondere umlaufenden) Schweißnaht zu erhöhen, wobei die Lebensdauer des Schweißnahtanfangs und/oder des Schweißnahtendes durch deren bevorzugte Positionierung auf zumindest einer der zwei ersten Seitenflächen vorteilhaft erhöht werden kann und die Lebensdauer der restlichen Schweißnaht (z. B. der Schweißnaht auf einer oder beiden der zwei zweiten Seitenflächen) durch das bevorzugte Ausgleichselement vorteilhaft erhöht werden kann.

Die Erfindung betrifft auch ein Batteriemodul (z. B. Traktionsbatteriemodul) für ein Kraftfahrzeug.

Bevorzugt ist das Kraftfahrzeug ein Nutzfahrzeug, wie z. B. ein Lastkraftwagen oder ein Omnibus.

Das Batteriemodul weist mehrere Batteriezellen auf, bevorzugt in Form eines Batteriezellenstapels aus mehreren in einer Stapelrichtung gestapelten Batteriezellen (z. B. Speicherzellen).

Das Batteriemodul kann beispielsweise zumindest zwei, zumindest drei, zumindest vier oder zumindest fünf oder sogar zumindest 15, zumindest 16, zumindest 17 oder zumindest 18 Batteriezellen aufweisen.

Lediglich beispielhaft kann es sich bei den Batteriezellen um prismatische Zellen und/oder (insbesondere prismatische) Lithium-Ionen-Batteriezellen handeln.

Das Batteriemodul umfasst vorzugsweise eine oder mehrere Batteriezellen wie hierin offenbart (insbesondere mit und/oder ohne Ausgleichselement).

Alternativ oder ergänzend kann das Batteriemodul vorzugsweise mehrere Batteriezellen aufweisen, z. B. mit einer Zellendose, einem darin angeordneten Aktivmaterial und einem Zellendeckel, die beispielsweise von einer Batteriezelle wie hierin offenbart zweckmäßig abweichen können, aber nicht zwingend müssen.

Es ist möglich, dass vorzugsweise neben der ersten und/oder der letzten Batteriezelle des Batteriemoduls und/oder des Batteriezellenstapels beispielsweise ein Ausgleichselement wie hierin offenbart angeordnet sein kann.

Das Batteriemodul kann beispielsweise an beiden gegenüberliegenden Endbereichen des Batteriemoduls jeweils eine Modulendplatte und ein Ausgleichselement aufweisen, wie vorstehend beschrieben wurde. Entsprechend können vorzugsweise die Schweißnähte der ersten und letzten Batteriezelle des Batteriezellenstapels durch Aufbringung der im Swelling-Fall durch die Ausgleichselemente induzierten Gegenkraft entlastet werden.

Die Swelling- und/oder Breathing-Richtung, die x-Richtung der Batteriezelle, die Stapelrichtung der Batteriezellen und/oder die zwei ersten Seitenflächen (beispielsweise deren Längserstreckungsrichtung) sind vorzugsweise (zweckmäßig im Wesentlichen) parallel zueinander ausgerichtet und/oder entsprechen einander.

Die zwei zweiten Seitenflächen (beispielsweise deren Längserstreckungsrichtung) und/oder die z-Richtung der Batteriezelle sind vorzugsweise (zweckmäßig im Wesentlichen) orthogonal zu der Swelling- und/oder Breathing-Richtung, der x-Richtung, der Stapelrichtung der Batteriezellen und/oder den zwei ersten Seitenflächen ausgerichtet.

Die x-Richtung kann vorzugsweise die Dickenrichtung der Batteriezelle sein, wobei alternativ oder ergänzend beispielsweise die y-Richtung die Höhenrichtung der Batteriezelle sein kann.

Die zwei ersten Seitenflächen sind vorzugsweise schmäler (z. B. kürzer) als die zwei zweiten Seitenflächen, sodass beispielsweise eine Längserstreckung der zwei ersten Seitenflächen (z. B. in Swelling- und/oder Breathing-Richtung, in x-Richtung der Batteriezelle und/oder in Stapelrichtung der Batteriezellen) kleiner sein kann als eine Längserstreckung der zwei zweiten Seitenflächen (z. B. in z-Richtung der Batteriezelle und/oder orthogonal zu der Swelling- und/oder Breathing-Richtung, der x-Richtung der Batteriezelle und/oder der Stapelrichtung der Batteriezellen).

Gemäß einem weiteren Aspekt der vorliegenden Offenbarung wird ein elektrischer Energiespeicher für ein elektrisch antreibbares Kraftfahrzeug bereitgestellt, aufweisend eine Vielzahl an Batteriezellen wie hierin offenbart und/oder ein Batteriemodul, vorzugsweise Batteriezellenstapelmodul, wie hierin beschrieben.

Die zuvor beschriebenen bevorzugten Ausführungsformen und Merkmale der Erfindung sind zweckmäßig miteinander kombinierbar. Andere vorteilhafte Weiterbildungen der Erfindung sind in den Unteransprüchen offenbart oder ergeben sich aus der nachstehenden Beschreibung bevorzugter Ausführungsbeispiele der Erfindung in Verbindung mit den beigefügten Figuren.:
- Figur 1: zeigt eine schematische Seitenansicht im Schnitt einer Batteriezelle gemäß einem Ausführungsbeispiel der vorliegenden Offenbarung,
- Figuren 2 und 3: zeigen eine schematische Draufsicht von oben auf die Batteriezelle, insbesondere deren Zellendeckel, der Figur 1,
- Figur 4: zeigt eine schematische Seitenansicht im Schnitt eines Batteriemoduls und zumindest einer Batteriezelle der Figuren 1 bis 3 gemäß einem Ausführungsbeispiel der vorliegenden Offenbarung; und
- Figur 5: zeigt eine schematische Seitenansicht zur Illustration der vom Ausgleichselement erzeugten Druckspannung in einem Schweißnahtbereich gemäß einem Ausführungsbeispiel der vorliegenden Offenbarung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

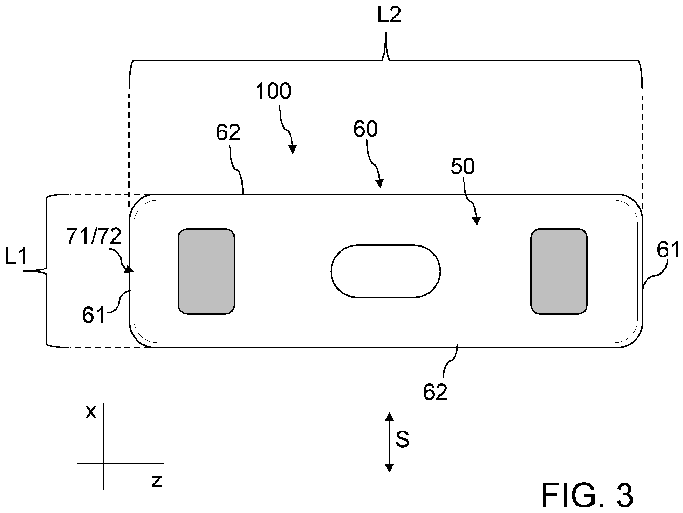

Figur 1 zeigt eine schematische Seitenansicht im Schnitt einer Batteriezelle 100 gemäß einem Ausführungsbeispiel der vorliegenden Offenbarung, wobei Figuren 2 und 3 eine Draufsicht von oben auf die Batteriezelle 100, insbesondere deren Zellendeckel 50 zeigen.

Die Batteriezelle 100 ist beispielhaft eine prismatische Batteriezelle 100, vorzugsweise eine Litium-lonen-Batteriezelle 100, mit dem Zellendeckel 50 und einer Zellendose 60.

Die Zellendose 60 umfasst zwei erste einander gegenüberliegende (insbesondere kurze) Seitenflächen 61 und zwei zweite einander gegenüberliegende (insbesondere lange) Seitenflächen 62, wobei die zwei ersten Seitenflächen 61 schmäler (insbesondere kürzer) sind als die zwei zweiten Seitenflächen 62, sodass die Zellendose 60 und/oder die Batteriezelle 100 vorzugsweise die Form eines im Wesentlichen rechteckigen Parallellepipeds und/oder Quaders aufweist (insbesondere mit und/oder ohne abgerundeten Ecken und/oder Kanten).

Die zwei ersten Seitenflächen 61 sind insbesondere schmäler als die zwei zweiten Seitenflächen 62, sodass eine Längserstreckung L1 der zwei ersten Seitenflächen 62 (z. B. in x-Richtung, in Swelling- und/oder Breathing-Richtung der Batteriezelle 100 und/oder in Stapelrichtung S der Batteriezellen 100 eines Batteriemoduls 200) kleiner ist als eine Längserstreckung L2 der zwei zweiten Seitenflächen 62 (z. B. in z-Richtung der Batteriezelle 100 und/oder orthogonal zu der x-Richtung, der Swelling- und/oder Breathing-Richtung und/oder der Stapelrichtung S).

Die zwei ersten Seitenflächen 61 sind zweckmäßig im Wesentlichen parallel zueinander angeordnet.

Die zwei zweiten Seitenflächen 62 sind zweckmäßig im Wesentlichen parallel zueinander angeordnet.

Die zwei ersten Seitenflächen 61 sind zweckmäßig im Wesentlichen orthogonal zu den zwei zweiten Seitenflächen 62 angeordnet.

Im und/oder auf dem Zellendeckel 60 sind beispielsweise zwei elektrische Terminals E und ein Sicherheitsventil V angeordnet, wobei das Sicherheitsventil V vorzugsweise zwischen den zwei Terminals E positioniert ist und/oder in der Zellendose 60 Aktivmaterial A untergebracht ist. Durch insbesondere die Komponenten E und V im Zellendeckel 50, und gegebenenfalls weitere oder andere Komponenten, resultieren unterschiedliche Steifigkeiten, die Spannungsspitzen an den respektiven Steifigkeitsübergangsbereichen induzieren.

Der Zellendeckel 50 und die Zellendose 60 sind durch eine vorzugsweise umlaufende Schweißnaht 70 miteinander verbunden.

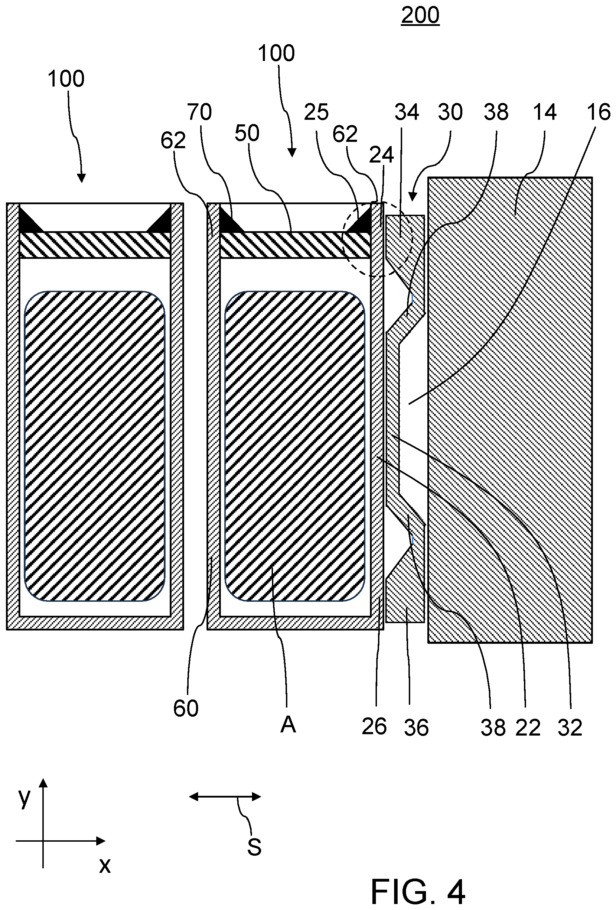

Diese Schweißnaht 70 wird durch das Swelling- und/oder Breathingverhalten des Aktivmaterials A statisch und dynamisch belastet. Die Belastung erfolgt vorrangig in x-Richtung der Batteriezelle 100, wobei die x-Richtung parallel zu der Swelling- und/oder Breathing-Richtung der Batteriezelle 100 und/oder der Stapelrichtung S eines Batteriemoduls 200 (vgl. z. B. Figur 4) ist.

Ein Schweißnahtanfang 71 und/oder ein Schweißnahtende 72 der Schweißnaht 70 ist, zweckmäßig unmittelbar oder mittelbar (z. B. über eine Beschichtung, eine Folie, ein Zwischenteil etc.), auf zweckmäßig nur einer oder beiden der zwei ersten Seitenflächen 61 positioniert, vorzugsweise sodass sich der Schweißnahtanfang 71 und das Schweißnahtende 72 beispielsweise auf zumindest einer der zwei ersten Seitenflächen 61 vereinigen, vorzugsweise überlappen und/oder aneinanderstoßen, insbesondere in einem Nahtvereinigungsbereich (z. B. Nahtstoß- und/oder Nahtüberlappungsbereich).

Die weniger belastbaren Start- und Endbereiche 71 und 72 stellen Schwachstellen im Design dar, welche bei ungünstiger Positionierung überlastet werden können, wodurch beispielsweise Schweißnahtbrüche resultieren können.

In Figur 2 sind der Schweißnahtanfang 71 und/oder das Schweißnahtende 72 beispielhaft auf der linken Seitenfläche 61 und der rechten Seitenfläche 61 angeordnet, wobei der Schweißnahtanfang 71 und das Schweißnahtende 72 auch beispielsweise auf nur einer der zwei Seitenflächen 61 angeordnet sein können (z. B. in Figur 2 nur links oder nur rechts). Der Schweißnahtanfang 71 und das Schweißnahtende 72 bilden insbesondere einen Nahtvereinigungsbereich (z. B. Nahtstoß- und/oder Nahtüberlappungsbereich).

Die Positionierung des Schweißnahtanfangs 71 und des Schweißnahtendes 72 und/oder des Nahtvereinigungsbereichs ist vorzugsweise an oder in einem Bereich des Zellendeckels 50 mit einer geringen oder sogar der geringsten mechanischen Belastung, insbesondere aus Swelling und/oder Breathing, und/oder ohne (insbesondere prägnanten) Steifigkeitsübergang und/oder Steifigkeitssprung.

Insbesondere kann die Schweißnaht 70 auf einer der zwei ersten Seitenflächen 61 anfangen und/oder enden, sodass bei einer durch ein Swelling und/oder Breathing der Batteriezelle 100 bedingten Kraftbeaufschlagung der Schweißnaht 70 der Schweißnahtanfang 71 und das Schweißnahtende 72 primär auf Zug und/oder Druck beansprucht werden und/oder nicht oder nur sekundär auf Scherung und/oder Biegung.

Das Bezugszeichen 25 kennzeichnet einen Schweißnahtbereich der Schweißnaht 70. Der Schweißnahtbereich 25 ist beispielsweise ein (z. B. mittiger) Schweißnahtbereich auf zumindest einer der zwei zweiten Seitenflächen 62, vorzugsweise auf der zweiten Seitenfläche 62, die zweckmäßig neben und/oder gegenüber dem unten beschriebenen Ausgleichselement 30 anzuordnen ist.

Das Bezugszeichen S kennzeichnet die Swelling- und/oder Breathing-Richtung der Batteriezelle 100 und/oder die Stapelrichtung mehrerer Batteriezellen 100 eines Batteriemoduls 200 (siehe unten).

Figur 4 zeigt eine schematische Seitenansicht im Schnitt eines Batteriemoduls 200 (z. B. Traktionsbatteriemodul) für ein Kraftfahrzeug gemäß einem Ausführungsbeispiel der vorliegenden Offenbarung.

Das Batteriemodul 200 weist mehrere (z. B. zumindest zwei, zumindest drei, zumindest vier oder zumindest fünf oder sogar zumindest 15, zumindest 16, zumindest 17 oder zumindest 18) Batteriezellen auf, die vorzugsweise baugleich zu der bereits beschriebenen Batteriezelle 100 ausgebildet sein können, aber nicht zwingend müssen.

Die Batteriezellen 100 können zweckmäßig einen Batteriezellenstapel aus mehreren in einer Stapelrichtung S gestapelten Batteriezellen bilden.

In Figur 4 sind aus Gründen der Übersichtlichkeit nur die ersten beiden Batteriezellen des Batteriezellenstapel dargestellt. Die Anzahl an Batteriezellen 100 kann selbstverständlich größer als zwei sein. Die Batteriezellen 100 sind bevorzugt prismatische Lithium-Ionen-Batteriezellen.

Das Batteriemodul 200 kann insbesondere ein Modulendelement 14 umfassen. Das Modulendelement 14 kann als eine Modulendplatte ausgeführt sein. Die Modulendplatte kann plane Außenflächen und einen z. B. quaderförmigen Querschnitt aufweisen. Die (erste) Batteriezelle 100, d.h. die Batteriezelle, die dem in Figur 4 gezeigten Modulendelement 14 von allen Batteriezellen 100 am nächsten ist, wird zur besseren Unterscheidbarkeit nachfolgend zweckmäßig als erste Batteriezelle 100 bezeichnet. Der Batteriezellenstapel ist (z. B. in Stapelrichtung S) beidseitig von jeweils einem solchen Modulendelement 14 (z. B. Modulendplatte) begrenzt. Die Modulendelemente 14 dienen zum Haltern und Verspannen des Batteriezellenstapels.

Vorstehend wurde bereits festgestellt, dass bei den Batteriezellen 100 das Batteriezellenvolumen mit zunehmender Anzahl an Lade- und Entladezyklen zunehmen kann, sog. Swelling. Dieses Swelling bzw. diese Deformation der Batteriezellen 100 erzeugt Belastungen in der starren Schweißnaht 70, mittels der ein Zellendeckel 50 mit einer Zellendose 60 verschweißt ist, welche überlagert mit ladungsbedingten Volumenänderungen des Aktivmaterials A zu einer Überlastung der Schweißnaht 70 führen können.

Dieses Swelling der Batteriezellen 100 kann bei der Auslegung des Batteriemoduls 200 vorzugsweise berücksichtigt werden, in dem entsprechend ausreichend Bauraum für diese Volumenänderung vorgehalten wird, was nachfolgend noch detaillierter erläutert wird. Über die Verspannung des Batteriezellenstapels mittels der Modulendelemente 14 wird eine zweckmäßig eingestellte Gegenkraft erzeugt, die eine zu starke Versteifung vermeidet und gleichzeitig eine Entlastung der Schweißnaht 70 der insbesondere ersten Batteriezelle 100 ermöglicht.

Hierzu ist vorzugsweise ein Ausgleichselement 30 seitlich außen neben einer der zwei zweiten Seitenflächen 62 der ersten Batteriezelle 100 positionierbar und zwar insbesondere zwischen der ersten Batteriezelle 100 und dem Modulendelement 14.

Ein zweckmäßig baugleiches Ausgleichselement ist bevorzugt analog am gegenüberliegenden Ende des Batteriezellenstapels zwischen dem dort angeordneten Modulendelement und der letzten Batteriezelle des Batteriezellenstapels angeordnet (in den Figuren nicht dargestellt).

Das Ausgleichselement 30 fungiert als eine Art nachgiebiges System. Das Ausgleichselement 30 zeichnet sich vorzugsweise dadurch aus, dass die alterungs- und/oder ladungsstatusbedingte Ausdehnung des Aktivmaterials A und damit der Zellendose 60 und/oder der ersten Batteriezelle 100 in positiver x-Richtung zu einer Deformation des Ausgleichselements 30 führt, die wie folgt ist: Die Deformation des Ausgleichselements 30 erfolgt im mittleren Bereich 32 des Ausgleichselements 30 in positiver x-Richtung, also hin zum Modulendelement 14; dagegen in den äußeren Bereichen 34, 36 des Ausgleichselements 30 bevorzugt in negativer x-Richtung. Dies ist so zu verstehen, dass diese Deformation in den äußeren Randbereichen 34, 36 eine Gegenkraft in negativer x-Richtung erzeugt, die entsprechend eine Druckspannung in der Schweißnaht 70, insbesondere im Schweißnahtbereich 25, der hervorgehoben ist durch die gestrichelte Kreislinie, erzeugt, die sich vorteilhaft positiv auf die Lebensdauer der Schweißnaht 70 auswirkt.

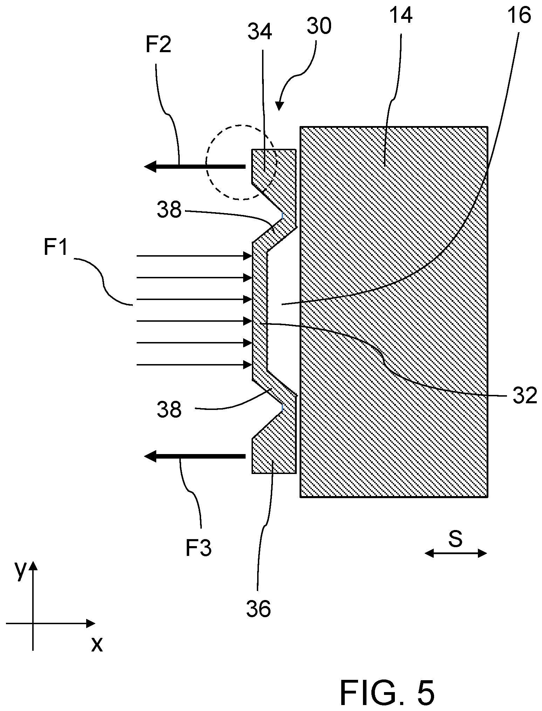

Dies ist in Figur 5 anhand einer schematischen Seitenansicht zur Illustration der vom Ausgleichselement 30 erzeugten Druckspannung im Schweißnahtbereich illustriert. Die neben dem Ausgleichselement 30 angeordnete erste Batteriezelle 100 ist in Figur 5 aus Übersichtlichkeitsgründen nicht dargestellt. Im Swelling-Fall erzeugt die erste Batteriezelle 100, insbesondere deren mittlerer Bereich 22, in dem das Swelling-bedingte Deformationsmaximum auftritt, eine durch das Swelling bedingte Kraftbeaufschlagung F1, die in Richtung der positiven x-Richtung gerichtet ist. Der mittlere Bereich 32 des Ausgleichselements 30 wird dadurch in x-Richtung, d.h. in Richtung eines Freiraums 16 gedrückt. Der mittlere Bereich 32 des Ausgleichselements 30 ist über die zweckmäßig schräg zur Kraftrichtung F1 verlaufenden, vorzugsweise gekröpften Verbindungsabschnitte 38 mit den äußeren Bereichen 34, 36 des Ausgleichselements 30 verbunden. Die Kraft F1 wird über diese Verbindungsabschnitte 38 an die äußeren Bereiche 34, 36 zumindest zum Teil weitergeleitet. In Reaktion hierauf werden die äußeren Bereiche 34, 36 stärker gegen das Modulendelement 14 gedrückt, an dem diese sich abstützen. In Reaktion hierauf wird durch den oberen Bereich 34 des Ausgleichselements 30 eine Gegenkraft F2 erzeugt, die in negativer x-Richtung gerichtet ist und die gegen den oberen Bereich 24 der ersten Batteriezelle 100 drückt, beispielsweise auf den Schweißnahbereich 25.

Durch den unteren Bereich 36 wird ebenfalls eine entsprechende Gegenkraft F3 erzeugt, die ebenfalls in die negative x-Richtung gerichtet ist und die gegen den unteren Bereich 26 der ersten Batteriezelle 100 drückt. Dadurch wird eine entsprechende Druckspannung in Folge des Swellings in diesen Bereichen 24, 26 erzeugt, insbesondere auch im Schweißnahbereich 25 der Schweißnaht 70.

Das in den Figuren 4 und 5 gezeigte Ausführungsbeispiel des Ausgleichselements 30 bietet zudem den besonderen Vorzug, dass die im Schweißnahbereich 25 (siehe gestrichelte Kreislinie) induzierten Belastungen, insbesondere Druckspannungen, die in Folge eines Swellings durch das Ausgleichselement 30 im Zusammenwirken mit dem Modulendelement 14 erzeugt werden, mit steigender Ausdehnung (Swelling) der ersten Batteriezelle 100 und damit Belastung der Schweißnaht 70 zunehmen. Das Ausgleichselement 30 ist somit vorzugsweise ausgebildet, sodass die mittels des äußeren Bereichs 34 des Ausgleichselements 30 erzeugte Druckspannung auf den Bereich des Zellendeckels 50 und/oder den Schweißnahtbereich 25 proportional zur Kraftbeaufschlagung und/oder zur Deformation des mittleren Bereichs 32 in Richtung der Kraftbeaufschlagung ist. Die erzeugten Gegenkräfte F2 und/oder F3 sind vorzugsweise proportional zur Kraft F1. Die Entlastung der Schweißnaht 70 und/oder des Schweißnahtbereichs 25 nimmt somit vorteilhaft automatisch mit zunehmenden, durch die Deformation der Zellendose 60 erzeugten Zugspannung auf die Schweißnaht 70 und/oder den Schweißnahtbereich 25 zu.

Das Ausgleichselement 30 ist insbesondere als nachgiebiges und/oder verformbares Bauteil, vorzugsweise einstückig, ausgebildet. Das Ausgleichselement 30 kann dabei beispielsweise aus folgenden Materialien hergestellt sein: Thermoplaste und/oder Kunststoffe, vorzugsweise faserverstärkte Kunststoffe. Zudem ist das Ausgleichselement 30 bevorzugt aus einem elektrisch isolierenden Material hergestellt. Vorteilhaft kann hierdurch eine zusätzliche, elektrisch isolierende Zwischenlage (Isolationsschicht) zwischen einer (insbesondere ersten) Batteriezelle 100 und dem Modulendelement 14 zur Vermeidung von Kriechströmen vermieden werden, da das Ausgleichselement 30 diese Funktion gemäß diesem Ausführungsbeispiel übernehmen kann.

Das Ausgleichselement 30 kann dabei zweckmäßig so ausgelegt werden, z. B. durch Wahl der Steifigkeit des Materials und/oder durch Anpassung der Form und Dicke des Ausgleichselements 30, dass ein Freiraum 16, insbesondere ein freier Swellingraum, mit einer definierten und/oder gewünschten Größe geschaffen wird und vom Ausgleichselement 30 eine definierte und/oder gewünschte Gegenkraft in Reaktion auf ein bestimmten Swelling der ersten Batteriezelle 100 erzeugt wird.

Es wird betont, dass die Erfindung nicht auf die spezielle, in den Figuren 4 und 5 gezeigte Ausführungsform des Ausgleichselements 30 beschränkt ist und das Ausgleichselement 30 beispielsweise zur Erzeugung der Kräfte F1 und F2 eine andere Form aufweisen kann.

Die in den Figuren 4 und 5 gezeigte bevorzugte Ausführungsform des Ausgleichselements 30 zeichnet sich jedoch vorzugsweise durch folgende Eigenschaften aus:
Das insbesondere einstückig ausgeführte Ausgleichselement 30 weist nur den mittleren Bereich 32, die beiden äußeren Bereiche 34 und 36, sowie die beiden Verbindungsabschnitte 38 auf. Der mittlere Bereich 32 des Ausgleichselements 30 erstreckt sich mindestens über 1/3 der Höhe der ersten Batteriezelle 100 und liegt an dieser an. Der mittlere Bereich 32 und/oder die Verbindungsabschnitte 38 sind jeweils plattenförmig ausgeführt, mit planen Oberflächen. Eine Dicke der äußeren Bereiche 34 und 36 in Stapelrichtung S kann mindestens doppelt so groß sein wie die Dicke des mittleren Bereichs 32 und/oder der Verbindungsabschnitte 38. Die äußeren Abschnitte 34, 36 weisen ebenfalls plane Auflageflächen auf, mit denen die äußeren Abschnitte an der ersten Batteriezelle 100 und dem Modulendelement 14 anliegen. Die Auflagefläche der äußeren Bereiche 34, 36 zur Anlage und Abstützung am Modulendelement 14 kann optional größer, vorzugsweise im Wesentlichen doppelt so groß, sein wie die Auflagefläche der äußeren Bereiche zur Anlage an der ersten Batteriezelle 100.

Ein bevorzugter Vorteil ist, dass die Gesamtlebensdauer der Schweißnaht 70 zweckmäßig erhöht werden kann. Die des Schweißnahtanfangs 71 und/oder des Schweißnahtendes 72 durch die bevorzugte Verlagerung an eine kurze Seitenfläche 61 der Zellendose 60, und die der restlichen Schweißnaht 70 durch das bevorzugte Ausgleichselement 30.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 offenbart.

### Bezugszeichenliste

- 100: Batteriezelle, vorzugsweise prismatische Batteriezelle
- 50: Zellendeckel
- 60: Zellendose
- 61: zwei erste einander gegenüberliegende (insbesondere kurze) Seitenflächen
- 62: zwei zweite einander gegenüberliegende (insbesondere lange) Seitenflächen
- L1: Längserstreckung der zwei ersten Seitenflächen
- L2: Längserstreckung der zwei zweiten Seitenflächen
- 70: Schweißnaht
- 71: Schweißnahtanfang
- 72: Schweißnahtende
- A: Aktivmaterial, vorzugsweise in Zellendose
- E: Elektrische Terminals
- V: Sicherheitsventil
- 200: Batteriemodul
- 14: Modulendelement, z.B. Modulendplatte
- 16: Freiraum
- 22: Mittlerer Bereich der Batteriezelle
- 24: Oberer Bereich der Batteriezelle
- 25: Schweißnahtbereich der Schweißnaht, vorzugsweise mittig auf einer der zwei zweiten Seitenflächen
- 26: Unterer Bereich der Batteriezelle
- 30: Ausgleichselement
- 32: Mittlerer Bereich des Ausgleichselement
- 34: (z. B. oberer) äußerer Bereich des Ausgleichselements
- 36: Zweiter und/oder unterer äußerer Bereich des Ausgleichselements
- 38: Verbindungsabschnitt
- F1: Kraftbeaufschlagung durch Swelling
- F2: Gegenkraft auf Zellendeckel und/oder Schweißnahtbereich
- F3: Gegenkraft auf unteren Bereich der Batteriezelle
- S: Swelling- und/oder Breathing-Richtung einer Batteriezelle und/oder Stapelrichtung
- x: x-Richtung Batteriezelle
- y: y-Richtung Batteriezelle
- z: z-Richtung Batteriezelle

## Patentansprüche

1. Batteriezelle (100), vorzugsweise prismatische Batteriezelle (100), mit einem Zellendeckel (50) und einer Zellendose (60), wobei die Zellendose (60) zwei erste einander gegenüberliegende Seitenflächen (61) und zwei zweite einander gegenüberliegende Seitenflächen (62) aufweist, wobei die zwei ersten Seitenflächen (61) schmäler sind als die zwei zweiten Seitenflächen (62), wobei der Zellendeckel (50) und die Zellendose (60) durch eine Schweißnaht (70) miteinander verbunden sind und ein Schweißnahtanfang (71) und/oder ein Schweißnahtende (72) der Schweißnaht (70) auf zumindest einer der zwei ersten Seitenflächen (61) angeordnet ist.

2. Batteriezelle (100) nach Anspruch 1, wobei sich der Schweißnahtanfang (71) und das Schweißnahtende (72) auf zumindest einer der zwei ersten Seitenflächen (61) vereinigen, vorzugsweise überlappen und/oder aneinanderstoßen.

3. Batteriezelle (100) nach Anspruch 1 oder 2, wobei der Schweißnahtanfang (71) und/oder das Schweißnahtende (72) auf zumindest einer der zwei ersten Seitenflächen (61) angeordnet ist, sodass bei einer durch ein Swelling und/oder Breathing der Batteriezelle (100) bedingten Kraftbeaufschlagung der Schweißnaht (70) der Schweißnahtanfang (71) und das Schweißnahtende (72) primär auf Zug und/oder Druck beansprucht werden und/oder nicht oder nur sekundär auf Scherung und/oder Biegung.

4. Batteriezelle (100) nach einem der vorhergehenden Ansprüche, wobei im und/oder auf dem Zellendeckel (50) zwei elektrische Terminals (E) und ein Sicherheitsventil (V) angeordnet sind und das Sicherheitsventil (V) zwischen den zwei Terminals (E) positioniert ist und/oder in der Zellendose (60) Aktivmaterial (A) untergebracht ist.

5. Batteriezelle (100) nach einem der vorhergehenden Ansprüche, wobei ein Ausgleichselement (30) seitlich außen neben einer der zwei zweiten Seitenflächen (62) positioniert ist und vorzugsweise dazu ausgebildet ist, zwischen der Batteriezelle (100) und einem Modulendelement (14) angeordnet zu werden.

6. Batteriezelle (100) nach Anspruch 5, wobei das Ausgleichselement (30) einen auf Höhe eines mittleren Bereichs (22) der Batteriezelle (100) angeordneten mittleren Bereich (32) und einen auf Höhe des Zellendeckels (50) der Batteriezelle (100) angeordneten äußeren Bereich (34) aufweist und dazu ausgebildet ist, bei einer durch ein Swelling der Batteriezelle (100) bedingten Kraftbeaufschlagung des Ausgleichselements (30),
a) in dem mittleren Bereich (32) des Ausgleichselements (30) in Richtung der Kraftbeaufschlagung zu deformieren, insbesondere zur Verringerung einer Druckspannung im mittleren Bereich (22) der Batteriezelle (100), und/oder
b) mittels des äußeren Bereichs (34) des Ausgleichselements (30) eine entgegengesetzt zur Richtung der Kraftbeaufschlagung gerichtete Kraft und/oder eine Druckspannung auf den Bereich des Zellendeckels (50) zu erzeugen und/oder auf einen Schweißnahtbereich (25) der Schweißnaht (70) zu erzeugen, wobei der Schweißnahtbereich (25), vorzugsweise mittig, auf zumindest einer der zwei zweiten Seitenflächen (62) angeordnet ist.

7. Batteriezelle (100) nach Anspruch 5 oder 6, wobei das Ausgleichselement (30) dazu ausgebildet ist, bei einer durch ein Swelling der Batteriezelle (100) bedingten Kraftbeaufschlagung des Ausgleichselements (30) den äußeren Bereich (34) des Ausgleichselements (30) entgegen der Richtung der Kraftbeaufschlagung zu deformieren, vorzugsweise zur Erhöhung einer Druckspannung auf den Bereich des Zellendeckels (50) und/oder den Schweißnahtbereich (25).

8. Batteriezelle (100) nach einem der Ansprüche 5 bis 7, wobei das Ausgleichselement (30) einen Freiraum (16) ausbildet, vorzugsweise einen zwischen dem mittleren Bereich (32) des Ausgleichselements (30) und dem Modulendelement (14) angeordneten Freiraum (16), vorzugsweise zur Aufnahme einer durch die Kraftbeaufschlagung bedingten Deformation des mittleren Bereichs (32, 22) des Ausgleichselements (30) und/oder der Batteriezelle (100) hin zum Modulendelement (14).

9. Batteriezelle (100) nach einem der Ansprüche 5 bis 8, wobei das Ausgleichselement (30) aus einem verformbaren Material gebildet ist und so geformt und zwischen der Batteriezelle (100) und dem Modulendelement (14) anordenbar ist, dass der mittlere Bereich (32) des Ausgleichselements (30) ohne die Kraftbeaufschlagung nicht am Modulendelement (14) (14) anliegt und bei der Kraftbeaufschlagung eine entgegen der Richtung der Kraftbeaufschlagung gerichtete Abstützkraft in dem äußeren Bereich (34) des Ausgleichselements (30) erzeugt.

10. Batteriezelle (100) nach einem der Ansprüche 5 bis 9, wobei das Ausgleichselement (30) derart ausgebildet ist, dass die mittels des äußeren Bereichs (34) des Ausgleichselements (30) erzeugte Druckspannung auf den Bereich des Zellendeckels (50) und/oder den Schweißnahtbereich (25) proportional zur Kraftbeaufschlagung und/oder zur Deformation des mittleren Bereichs (32) in Richtung der Kraftbeaufschlagung ist.

11. Batteriezelle (100) nach einem der Ansprüche 5 bis 10, wobei
- der mittlere Bereich (32) des Ausgleichselements (30) zwischen dem äußeren Bereich (32) und einem zweiten äußeren Bereich (36) angeordnet ist und beide äußere Bereiche (32, 36) dazu ausgebildet sind, am Modulendelement (14) anzuliegen und/oder sich dort abzustützen, und/oder
- das Ausgleichselement (30) zwei, insbesondere gekröpfte, Verbindungsabschnitte (38) aufweist, über die die äußeren Bereiche (34, 36) mit dem mittleren Bereich (32) des Ausgleichselements (30) verbunden sind, wobei vorzugsweise die Verbindungsabschnitte (38) dazu ausgebildet sind, weder an der Batteriezelle (100) noch am Modulendelement (14) anzuliegen.

12. Batteriezelle (100) nach einem der Ansprüche 5 bis 11, wobei der mittlere Bereich (34) des Ausgleichselements (30) an dem mittleren Bereich (24) der Batteriezelle (100) anliegt und der äußere Bereich (34) des Ausgleichselements (30) an einem oberen Bereich (24) der Batteriezelle (100) auf Höhe des Zellendeckels (50) und/oder des Schweißnahtbereichs (25) anliegt.

13. Batteriezelle (100) nach einem der vorherigen Ansprüche, wobei das Ausgleichselement (30) als flexibles, elastisches, nachgiebiges und/oder verformbares Bauteil, vorzugsweise einstückig, ausgebildet ist.

14. Batteriezelle (100) nach einem der vorhergehenden Ansprüche, wobei die Schweißnaht (70) umlaufend ist.

15. Batteriemodul (200) für ein Kraftfahrzeug, vorzugsweise Nutzfahrzeug, aufweisend einen Batteriezellenstapel aus mehreren in einer Stapelrichtung (S) gestapelten Batteriezellen, zumindest ein Modulendelement (14) und zumindest eine Batteriezelle (100) nach einem der vorhergehenden Ansprüche.

16. Elektrischer Energiespeicher für ein elektrisch antreibbares Kraftfahrzeug, aufweisend ein Batteriemodul (200), vorzugsweise Batteriezellstapelmodul, gemäß Anspruch 15.
